(19) Europäisches Patentamt / European Patent Office / Office européen des brevets

(11) **EP 2 426 630 A1**

(12) **DEMANDE DE BREVET EUROPEEN**

(43) Date de publication:
**07.03.2012 Bulletin 2012/10**

(51) Int Cl.:
**G06Q 10/00** *(2012.01)*

(21) Numéro de dépôt: **11290348.9**

(22) Date de dépôt: **28.07.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **03.09.2010 FR 1003522**

(71) Demandeur: **IFP Energies nouvelles**
**92852 Rueil-Malmaison Cedex (FR)**

(72) Inventeurs:
• **Bouzarkouna, Zyed**
  **75013 Paris (FR)**
• **Ding, Didier Yu**
  **78230 Le Pecq (FR)**
• **Auger, Anne**
  **91405 Orsay Cedex (FR)**
• **Inria, Saclay**
  **91405 Orsay Cedex (FR)**
• **Schoenauer, Marc**
  **94800 Villejuif (FR)**

(54) **Procédé pour optimiser le positionnement de puits dans un réservoir pétrolier**

(57) - Procédé pour déterminer des emplacements de puits, ou zones de drainage, au sein d'un réservoir d'hydrocarbures permettant l'exploitation de ce réservoir.
- On génère aléatoirement des configurations de zones de drainage, en générant pour chaque configuration des emplacements pour chaque zones de drainage. On détermine les emplacements de chaque zone de drainage pour optimiser un critère de qualité, au moyen d'un algorithme d'optimisation itératif au cours duquel : pour des premières itérations, on évalue le critère de qualité au moyen d'un simulateur d'écoulement, et pour des itérations ultérieures, on construit un modèle approché d'évaluation du critère de qualité, on évalue la qualité de ce modèle approché, et on détermine le critère de qualité au moyen du modèle approché ou au moyen du simulateur d'écoulement en fonction de la qualité de ce modèle approché.

Fig. 4

**Description**

La présente invention concerne le domaine technique de l'industrie pétrolière. En particulier, l'invention permet d'optimiser l'exploitation d'un gisement pétrolier en optimisant l'emplacement de zones de drainage forées pour produire des hydrocarbures.

L'extraction d'hydrocarbures contenus dans un gisement pétrolier, est réalisée au moyen de puits forés à travers les formations géologiques. Cette extraction nécessite le forage de puits producteurs au travers desquels les hydrocarbures sont remontés à la surface, et parfois le forage de puits injecteurs au travers desquels on injecte un produit (eau, gaz, additifs,...) pour améliorer la récupération des d'hydrocarbures. Au sein du gisement pétrolier, ces puits définissent des zones de drainage. Une zone de drainage peut également dépendre du débit du puits, du temps, etc.

Le forage et l'équipement de telles zones de drainage (tubage, ciment,...) sont des opérations très couteuses. De plus, une zone de drainage mal positionnée au sein du réservoir peut ne produire qu'une faible quantité d'hydrocarbures, voire ne produire que de l'eau. L'emplacement d'un puits, et plus précisément l'emplacement de la zone de drainage associée, est un facteur très influant sur la quantité d'hydrocarbures récupérés à partir du champ considéré. L'emplacement des zones de drainage conditionne donc la qualité de la récupération, en termes de volume récupéré et de coût de production. Cette qualité est classiquement évaluée au moyen d'un paramètre appelé NPV (*"Net Present Value"*), correspondant à la différence des flux de trésorerie généré par l'investissement correspondant au placement des puits.

L'industrie pétrolière est donc confronter à un problème d'optimisation d'exploitation des gisements, qui se traduit par un problème d'optimisation de l'emplacement des zones de drainage des puits de production et d'injection. Définir l'emplacement d'une zone de drainage consiste à définir sa position (ensemble de coordonnées x, y et z) dans le réservoir.

Pour définir les emplacements optimaux des zones de drainage, c'est-à-dire les emplacements qui permettront de maximiser le volume d'hydrocarbures récupéré tout en minimisant les coûts de production, les spécialistes utilisent un premier outil appelé "modèle de réservoir". Un modèle de réservoir est une représentation du sous-sol et du gisement. Il s'agit d'une maquette qui discrétise le milieu naturel. Un modèle de réservoir comporte ainsi deux types d'objets : un maillage(ou grille), et une ou plusieurs cartes. Chaque carte correspondant à la distribution d'une propriété pétrophysique. Ainsi, à chaque maille, on associé au moins une valeur de propriété pétrophysique. Un modèle de réservoir rend compte de la structure, des propriétés pétrophysiques, des propriétés des fluides en place au sein du gisement, décrivant ainsi à la fois la structure et le comportement du gisement considéré. Cette représentation est construite au moyen de mesures (carottes, diagraphies, sismiques,...) réalisées par des géologues, des géophysiciens et des pétrophysiciens, et d'un ordinateur. L'ordinateur est notamment utilisé pour représenté cette objet sur un écran, facilitant ainsi son utilisation.

Les spécialistes utilisent un second outil appelé "simulateur d'écoulement". Un simulateur d'écoulement est un logiciel permettant de modéliser les écoulements au sein d'un gisement pétrolier représenté au moyen d'un modèle de réservoir. Le simulateur d'écoulement utilise donc le modèle de réservoir pour réaliser ces modélisations. Ce logiciel permet par exemple, d'évaluer la production d'un gisement en fonction des emplacements de puits décidés.

On connaît des méthodes, utilisant un modèle de réservoir et un simulateur d'écoulement, pour optimiser l'emplacement des puits au sein d'un gisement afin d'optimiser la production de gisement d'hydrocarbures.

Ces méthodes consistent à modifier de façon itérative, à l'aide d'un algorithme d'optimisation stochastique ou déterministe, plusieurs paramètres définissant les positions et les trajectoires des puits dans le réservoir, de façon à maximiser un critère de qualité, tel que le NPV ou la production d'hydrocarbures. Ce critère de qualité est quantifié par une fonction objectif.

On connaît par exemple, l'utilisation d'algorithme génétique simple ou combiné avec d'autres techniques comme le krigeage et les réseaux de neurones. Cette technique est décrite dans les documents suivants :

- Guyaguler, B. & Horne, R. (2000). Optimization of well placement. Journal of Energy Resources Technology, 122, 64-70.

- Guyaguler, B., Horne, R., Rogers, L. & Rosenzweig, J. (2000). Optimization of well placement in a gulf of mexico waterflooding project. In SPE annual technical conference and exhibition.

- Yeten, B., Durlofsky, L. & Aziz, K. (2003). Optimization of nonconventional well type, location and trajectory. SPE Journal, 8, 200-210.

- Emerick, A., Silva, E., Messer, B., Almeida, L., Szwarcman, D., Pacheco, M. & Vellasco, M. (2009). Well placement optimization using a genetic algorithm with nonlinear constraints. In SPE reservoir simulation symposium.

D'autres techniques ont été décrites en utilisant des méthodes de gradients dans les documents suivants:

- Handels, M., Zandvliet, M., Brouwer, D. & Jansen, J. (2007). Adjointbased well-placement optimization under production constraints. In SPE reservoir simulation symposium.

- Sarma, P. & Chen, W. (2008). Efficient well placement optimization with gradient-based algorithms and adjoint models. In SPE intelligent energy conference and exhibition.

On peut également citer les techniques dans les documents suivants :

- Beckner, B. & Song, X. (1995). Field development planning using simulated annealing optimal economic well scheduling and placement. In SPE annual technical conference and exhibition.

- Ding, D. (2008). Optimization of well placement using evolutionary algorithms. In SPE europec/EAGE annual conference and exhibition.

Cependant, les approches déterministes ne réussissent en général pas à résoudre ce problème, car la fonction objectif liée à l'emplacement des puits au sein du réservoir (zone de drainage) est une fonction objectif difficile à résoudre (une fonction non-lisse, non-convexe avec plusieurs minima locaux...). Concernant, les approches stochastiques, elles représentent un processus long nécessitant un nombre très élevé de simulations d'écoulement. Ces techniques sont donc très coûteuses en temps CPU. L'application industrielle, par un ingénieur réservoir, de telles techniques est donc difficile en pratique.

Il est donc important de réduire le nombre de simulations nécessaires pour réaliser une optimisation de placement des zones de drainage répondant aux besoins des ingénieurs qui exploitent les réservoirs pétroliers.

Ainsi, l'objet de l'invention concerne un procédé pour déterminer des emplacements de zones de drainage au sein d'un réservoir d'hydrocarbures permettant une exploitation optimale de ce réservoir, en limitant le nombre de simulations d'écoulement. Pour y parvenir, le procédé se base sur la définition d'un modèle approché pour évaluer la qualité de l'exploitation, et sur une évaluation de la qualité de ce modèle approché.

A partir d'un simulateur d'écoulement et d'un modèle de réservoir, le procédé selon l'invention comporte les étapes suivantes : on définit un nombre de zones de drainage à forer au sein dudit réservoir ; on choisit au moins un critère de qualité de l'exploitation ; et on réalise les étapes suivantes :

    i. on génère aléatoirement des configurations de zones de drainage, en générant pour chaque configuration des emplacements pour chaque zones de drainage ;

    ii. on détermine les emplacements de chaque zone de drainage permettant d'optimiser ledit critère de qualité, en modifiant lesdites configurations au moyen d'un algorithme d'optimisation itératif au cours duquel :

        pour des premières itérations, on évalue ledit critère de qualité au moyen dudit simulateur d'écoulement et dudit modèle de réservoir, et

        pour des itérations ultérieures,

        - on construit un modèle approché d'évaluation dudit critère de qualité, à partir d'une structure de données contenant un ensemble de configurations associées à une valeur de critère obtenue au moyen dudit simulateur d'écoulement ;

        - on évalue une qualité dudit modèle approché au moyen d'une procédure de classement approché ;

        - on détermine ledit critère de qualité au moyen dudit modèle approché ou au moyen dudit simulateur d'écoulement en fonction de la qualité dudit modèle approché.

Selon l'invention on peut définir le modèle approché en définissant une distance entre deux configurations, en sélectionnant k configurations de la structure de données dont la distance par rapport à la configuration pour laquelle on évalue le critère est la plus faible, et en définissant un modèle quadratique desdites k configurations.

Selon l'invention on peut évaluer la qualité du modèle approché en réalisant les étapes suivantes :

    a. on calcule le critère de qualité pour chaque configuration au moyen du modèle approché, et l'on réalise un premier classement des configurations en fonction de la valeur du critère pour chaque configuration ;

b. on sélectionne n configurations associés aux critères les plus élevés, et l'on calcule le critère de qualité pour ces n configurations au moyen du simulateur d'écoulement et du modèle de réservoir, chaque configuration et chaque critère étant ajoutés à la structure de donnée ;

c. on calcule à nouveau le critère de qualité pour chaque configuration au moyen du modèle approché construit sur la structure de données complétée, et on réalise un second classement des configurations en fonction de la valeur du critère pour chaque configuration ;

d. on évalue la qualité du modèle approché en comparant le premier classement et le second classement.

Selon un mode de réalisation, on réitère les étapes i à iii en faisant varier le nombre de zones de drainage.

L'algorithme d'optimisation itératif est préférentiellement un algorithme stochastique de type CMA-ES.

Selon l'invention, les zones de drainage à forer peuvent comporter des drains multi-branches.

Enfin, selon l'invention on peut calculer le critère de qualité pour chaque configuration au moyen de plusieurs modèles approchés correspondants à une ou plusieurs zones de drainage.

D'autres caractéristiques et avantages du procédé selon l'invention, apparaîtront à la lecture de la description ci-après d'exemples non limitatifs de réalisations, en se référant aux figures annexées et décrites ci-après.

**Présentation sommaire des figures**

- La figure 1 montre le maillage du réservoir utilisé. Elle comporte une vue en perspective du réservoir (a) et une vue de dessus (b), et présente l'élévation verticale du réservoir (échelle de gris).

- La figure 2 montre une vue de dessus du maillage du réservoir, et présente en gris foncé des régions préférentielles de forage Z1 et Z2.

- La figure 3 montre l'évolution de la meilleure valeur de NPV trouvé en utilisant le procédé selon l'invention et la compare avec celle trouvée en utilisant une approche conventionnelle.

- La figure 4 montre une vue de dessus du maillage du réservoir avec les emplacements des zones de drainage PROD et INJ.

**Description du procédé**

Le procédé selon l'invention comporte les étapes principales suivantes :

1. on construit un modèle de réservoir et choisit un simulateur d'écoulement ;

2. on définit un nombre de zones de drainage à forer au sein du réservoir d'hydrocarbures ;

3. on choisit un critère de qualité de l'exploitation de ce réservoir ;

4. on génère aléatoirement des configurations de zones de drainage ;

5. on détermine les emplacements de chaque zone de drainage permettant d'optimiser le critère de qualité au moyen d'un algorithme d'optimisation itératif.

1. Construction d'un modèle de réservoir et choix d'un simulateur d'écoulement ;

On commence par construire le modèle de réservoir qui correspond à une grille définie par les propriétés du réservoir comme la porosité et la perméabilité. Ce modèle est construit à partir de mesures collectées à partir du réservoir. La construction d'un modèle de réservoir est bien connue des spécialistes.

On choisit également un simulateur d'écoulement. On peut utiliser le logiciel PumaFlow™ (IFP Energies nouvelles, France), ou un simulateur simplifié du type de lignes de courant par exemple, moins couteux en temps CPU.

2. Définition du nombre de zones de drainage à forer au sein du réservoir

On appelle "zone de drainage" une zone du réservoir traversée par un puits. On définit dans cette étape le nombre de puits à forer à travers le réservoir, définissant des zones de drainage. Ces puits peuvent être des puits injecteurs et/ou producteurs.

3. Choix d'un critère de qualité de l'exploitation du réservoir

La qualité de l'exploitation du réservoir est classiquement évaluée au moyen d'un paramètre appelé NPV (*"Net Present Value"*), correspondant à la différence des flux de trésorerie généré par l'investissement correspondant au placement des puits.
On peut également utiliser la production des puits.

4. Génération aléatoire de configurations de zones de drainage

Une configuration de zones de drainage correspond à l'emplacement, au sein du réservoir, de l'ensemble des puits à forer dans le réservoir (emplacement de l'ensemble des zones de drainage).
On définit un paramètre $\lambda$, dit taille de population, caractérisant le nombre de configurations de zones de drainage utilisées à chaque génération. La population initiale (première génération) est générée aléatoirement.
La configuration de zones de drainage est représentée par la localisation de chaque zone de drainage au sein du réservoir. Il peut s'agir des coordonnées des points définissants les extrémités, au sein du réservoir, des puits et de ses drains latéraux. La dimension du problème est ainsi égale au nombre de variables utilisées pour représenter la configuration des zones de drainage.

5. Détermination des emplacements de chaque zone de drainage permettant d'optimiser le critère de qualité au moyen d'un algorithme d'optimisation itératif

Après avoir générer aléatoirement des configurations de zones de drainage, on détermine les emplacements de chaque zone de drainage permettant d'optimiser le critère de qualité, en modifiant ces configurations.
Selon l'invention, ces configurations sont modifiées au moyen d'un algorithme d'optimisation itératif au cours duquel :

i. pour les premières itérations, on évalue le critère de qualité au moyen du simulateur d'écoulement et du modèle de réservoir, et

ii. pour des itérations ultérieures,

- on construit un modèle approché pour évaluer le critère de qualité, à partir d'une structure de données contenant un ensemble de configurations associées à une valeur de critère obtenue au moyen du simulateur d'écoulement ;

- on évalue la qualité du modèle approché au moyen d'une procédure de classement approché ;

- on détermine le critère de qualité au moyen du modèle approché ou au moyen du simulateur d'écoulement en fonction de la qualité du modèle approché.

Selon un mode de réalisation, le processus d'optimisation est effectué en utilisant un algorithme d'optimisation stochastique de type CMA-ES. L'algorithme CMA-ES est un algorithme d'optimisation basé sur la notion de population évoluant à chaque itération (dite génération). Une population est définie comme un ensemble de configurations de zones de drainage solutions, appelés individus, du problème. L'algorithme CMA-ES modifie donc, d'une façon itérative, les paramètres de ces configurations de façon à maximiser la fonction objectif considérée jusqu'à atteindre un critère d'arrêt fixé. Ce critère d'arrêt peut porter, en pratique, sur un nombre maximal de simulations de réservoir ou un nombre maximal d'itérations à effectuer.
On génère une nouvelle population avec une loi normale défini par une moyenne m, un pas $\sigma$ et une matrice de covariance C. Ces paramètres sont mis à jour à chaque itération a partir des valeurs de fonction objectif obtenues, plus précisément à partir du classement des individus suivant leurs valeurs respectifs de fonctions objectifs. Les équations utilisées pour la mise à jour des différents paramètres de CMA-ES dans cette étape sont décrites dans :

Hansen N. and Ostermeier A (2001). Completely derandomized self-adaptation in evolution strategies. Evolutionary Computation, 9(2):159-195.

On peut choisir par exemple pour déterminer l'emplacement de deux zones de drainage correspondant à un puits injecteur et un puits producteur, une taille de population égal à 40 et un critère d'arrêt correspondant au nombre maximal de générations égal à 60 itérations.

*Construction du modèle approché et évaluation de sa qualité*

Selon l'invention, la procédure d'optimisation qui nécessite à chaque génération et pour chaque individu une évaluation de la fonction objectif, à partir des résultats obtenus par le simulateur d'écoulement, utilise un modèle approché pour remplacer ces évaluations.

Selon un mode de réalisation, on peut utiliser une régression locale pour construire ce modèle approché. La qualité de ce modèle approché est évaluée avec une procédure de classement approché (*"Approximate Ranking Procedure"*).

Les configurations des zones de drainage évaluées et les valeurs de fonction objectif (critère de qualité) correspondantes sont stockées après chaque évaluation. L'ensemble de ces évaluations sont stockées dans une structure de données, et est utilisé pour calculer la valeur du modèle approché en un point (ou individu) donné.

Pour calculer la valeur du modèle approché en un point $q = (q_1,...,q_n) \in R^n$ - un point définit une configuration de zone de drainage - notée $\hat{f}(q)$, on sélectionne dans la structure de données les k points les plus proches de q au sens de la distance d qui est défini comme suit pour deux points $p_1$ et $p_2$ :

$$d(p_1, p_2) = \sqrt{(p_1 - p_2)^T C^{-1} (p_1 - p_2)} \quad \forall p_1, p_2 \in \Re^n$$

avec :

- $n$ : la dimension du problème qui est égal au nombre de variables utilisées pour identifier le nombre des zones de drainage à forer ;
- $k = n(n + 3) + 2$
- **C** : la matrice de covariance définie par CMA-ES.

On définit $\hat{f}$ par un modèle quadratique complet en utilisant

$$\beta \in \Re^{\frac{n(n+3)}{2}+1} :$$

$$\hat{f}(q,\beta) = \beta^T (q_1^2,...,q_n^2, q_1 q_2,...,q_{n-1} q_n, q_1,...,q_n, 1)$$

Pour déterminer $\beta$, on minimise le critère suivant par rapport à $\beta$ :

$$A(q) = \sum_{j=1}^{k} [(\hat{f}(x_j,\beta) - y_j)^2 K(\frac{d(x_j,q)}{h})]$$

avec :

- $x_j$, $y_j$ : respectivement *le j* éme point le plus proche de *q* et sa valeur de fonction objectif ;

- $h$ : la distance entre *q* et le *k* éme point le plus proche de *q* ;

- $K$ : une fonction défini entre 0 et 1 et strictement décroissante avec $K(0)=1$ et $K(1)=0$. Un exemple de $K$ peut être $K(\zeta) = (1- \zeta^2)^2 \ \forall \zeta \in [0,1]$.

Ayant déterminé β, la valeur du modèle approché au point *q* considéré est calculée en évaluant le modèle quadratique complet défini par β en ce point.

On utilise une stratégie de classement approché pour décider à chaque itération de CMA-ES les points qui doivent être simulé avec le simulateur d'écoulement et ceux qui doivent être approché par le modèle approché. Dès que la structure de données contient un nombre minimum de points simulés, à chaque génération, on procède aux étapes suivantes :

a On calcule le modèle approché (noté $\hat{f}$) pour chaque point de la génération ;

b On identifie l'ensemble des μ points avec les valeurs de fonction objectif approchée les plus élevées ;

c On effectue une simulation d'écoulement pour chacun des meilleurs $n_{init}$ configurations de zone de drainage. On ajoute les résultats obtenus (les points et les valeurs de fonctions objectives correspondantes) à la structure de données ;

d On recalcule le modèle approché pour chaque point de la génération ;

e On identifie le nouvel ensemble des μ points avec les valeurs de fonction objectif approchée les plus élevées ;

f On considère trois cas envisageables :

- Si l'ensemble des μ points avec les valeurs de fonction objectif approchée les plus élevées reste le même, et si le point avec la meilleure valeur de fonction objectif approchée reste inchangé, on passe à l'étape suivante.

- Si on a effectué des simulations d'écoulement pour un nombre supérieur au quart de la taille de la population pour une génération et si le point avec la meilleure valeur de fonction objectif approchée reste inchangé, on passe à l'étape suivante.

- Sinon, on effectue une simulation d'écoulement pour chacun des meilleurs $n_b$ configurations de puits. On ajoute les résultats obtenus (les points et les valeurs de fonctions objectives correspondantes) à la structure de données. On calcule le modèle approché pour chaque point de la génération. On identifie le nouvel ensemble des μ points avec les valeurs de fonction objectif approchée les plus élevées. On répète l'étape f. On retourne à l'étape de génération d'une nouvelle population.

e Le modèle approché est accepté: On considère la valeur du modèle approché pour remplacer la valeur de fonction objectif pour les points qui ne sont pas simulés avec le simulateur d'écoulement.

Des paramètres sont à définir pour utiliser cette méthodologie. On peut choisir par exemple :

- une taille minimale de la structure de données égal à $n \times (n + 3) + 2$ ;

- $n_{init}$ : le nombre de points à simuler initialement égal à 1 ;

- $n_b$ : le nombre de points à simuler si le critère d'acceptation du modèle approché n'est pas satisfait égal à 1 ;

- μ : le nombre des points utilisés pour définir le critère d'acceptation du modèle approché égal, par défaut, à la moitié de la taille de population λ. Cette valeur correspond aussi à la valeur utilisée pour définir le nombre des points utilisés pour les mises à jour des paramètres de CMA-ES.

**Variante 1**

Selon un mode de réalisation, le procédé est effectuée plusieurs fois avec un nombre différent de zones de drainage, afin de choisir la meilleure configuration, c'est-à-dire celle qui offre le meilleur critère de qualité (NPV le plus élevé ou production des puits le plus élevé).

Selon un autre mode de réalisation, on peut définir des régions préférentielles pour contenir les zones de drainage. Ces régions peuvent être proposées directement par les ingénieurs réservoir. On détermine ensuite la meilleure configuration des zones de drainage à placer dans les régions déjà identifiées. La population initiale (première génération) est générée aléatoirement dans ces régions identifiées.

**Variante 2**

Selon un autre mode de réalisation, on divise le critère de qualité global en plusieurs critères de qualité pour chaque zone de drainage ou ensemble de zones de drainage.

On définit $n_{cq}$ le nombre des critères de qualité à approcher. Le critère de qualité global est donc

$$f = \sum_{i=1}^{n_{cq}} f_i$$

, avec $f_i$ le critère de qualité d'une zone de drainage ou d'un ensemble de zones de drainage, appelé dans ce qui suit $i^{\text{éme}}$ composante du critère de qualité.

Selon ce mode de réalisation, on construit un modèle approché pour chaque composante du critère de qualité.

Les configurations des zones de drainage évaluées et les valeurs des différents composantes de la fonction objectif (critère de qualité) correspondantes sont stockées après chaque évaluation. L'ensemble de ces évaluations sont stockées dans une structure de données, et est utilisé pour calculer chacune des valeurs des composantes du modèle approché en un point (ou individu) donné.

Pour calculer la valeur du modèle approché en un point $q = (q_1,...,q_n) \in R^n$ - un point définit une configuration de zone de drainage - notée $\hat{f}(q)$, on calcule:

$$\hat{f}(q) = \sum_{i=1}^{n_{cq}} \hat{f}_i(q),$$

avec $\hat{f}_i$ la $i^{\text{éme}}$ composante du modèle approché (i.e. le modèle approché de la $i^{\text{éme}}$ composante du critère de qualité).

On définit pour chaque modèle approché les différents paramètres dont il dépend. Par exemple, on peut supposer que le modèle approché d'une composante du critère de qualité ne dépend que de la localisation de quelques zones de drainage.

On construit ainsi les différentes composantes du modèle approché d'une façon similaire à celle défini dans l'étape 5.

**Exemple d'application**

Le procédé selon l'invention peut être utilisé pour placer, au sein du réservoir, de nouveaux puits ou ajouter de nouveaux drains latéraux à des puits déjà existants.

Il peut être appliqué sur de nouveaux champs ou des champs matures (contenant des puits déjà forés).

Nous présentons en particulier un exemple d'application pour détermine l'emplacement de deux zones de drainage correspondant à un puits producteur et un puits injecteur dans un nouveau champ, avec des régions identifiées par l'ingénieur réservoir.

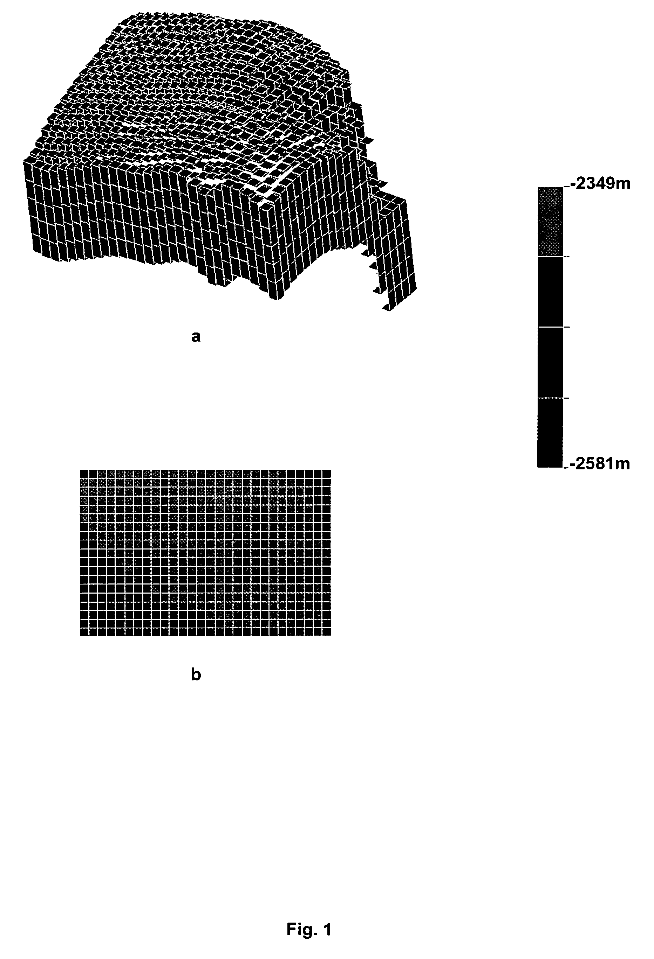

Ce procédé est appliqué à un réservoir synthétique. Ce réservoir est de taille 3420m x 5040m x 90m. Le maillage est cartésien avec 19 mailles dans la direction **x**, 28 mailles dans la direction **y** et 5 mailles dans la direction **z**. La taille des mailles est de 180m x 180m x 18m. L'élévation verticale du réservoir est présentée sur la figure 1. La figure 1 montre le maillage du réservoir utilisé, et comporte une vue en perspective du réservoir (a) et une vue de dessus (b). Le champ considéré ne contient aucun puits déjà foré. On propose de trouver le meilleur emplacement pour chacune des deux zones de drainage avec uniquement un tronc principal (sans drains latéraux). La critère de qualité choisi est le NPV défini comme suit :

$$f = \sum_{n=0}^{Y} \left( \frac{1}{(1+APR)^n} \left[ Q_{n,o} \times C_{n,o} + Q_{n,g} \times C_{n,g} + Q_{n,w} \times C_{n,w} \right] \right) - C_d$$

où $Q_{n,p}$ est la production du champ considéré en phase $p$ dans la période $n$, $C_{n,p}$ est le gain ou la perte associé à la production de la phase $p$ pendant la période $n$, la phase $p$ peut représenter l'huile, le gaz ou l'eau qui sont notés respectivement par $o$, $g$, $w$, APR est le taux d'intérêt annuel. Y est le nombre de périodes considérées, $C_d$ est le cout nécessaire pour le forage et la complétion pour les puits considérés, $C_d$ est approximé comme suit :

$$C_d = \sum_{k=0}^{N}[A.d_w.\ln(l_w).l_w]_k + \sum_{m=1}^{\overline{N}}[C_{jun}]_m$$

avec $l_w$ la longueur de la zone de drainage (longueur du puits dans le réservoir), $d_w$ le diamètre de la zone de drainage (diamètre du puits dans le réservoir), A une constante, $C_{jun}$ le coût d'une jonction, N le nombre total de troncs et latéraux, et $\overline{N}$ le nombre de jonctions.

Les productions $Q_{n,p}$ de la phase $p$ pour la période n sont obtenues au moyen du simulateur d'écoulement. Dans cet exemple on utilise le simulateur d'écoulement PumaFlow™ (IFP Energies nouvelles, France).

Dans cet exemple, N= 2 et $N = 0$. Les constantes utilisées pour définir la fonction objectif sont représentées dans le tableau qui suit:

| Constantes | Valeurs |
|---|---|
| $C_{n,o}$ | 60 $ / baril |
| $C_{n,g}$ | -4 $ /baril |
| $C_{n,w}$ | 0 |
| APR | 0.2 |
| A | 1000 |
| $d_w$ | 0.1 m |
| $C_{jun}$ | $10^5$ $ |

On ajoute au problème une contrainte qui porte sur la longueur des zones de drainage qui ne doit pas dépasser 1000 m.

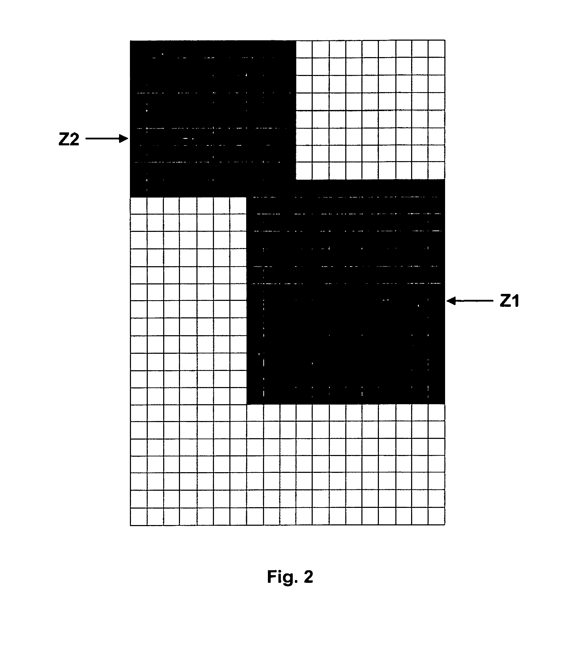

On définit deux régions pour placer les zones de drainage (Figure 2). Une région, notée Z1, doit contenir la zone de drainage correspondant au puits producteur, et une région Z2 doit contenir la zone de drainage correspondant au puits injecteur. Z1 et Z2 sont définies comme suit :

Z1 = Les mailles: 8-19 selon **x**, 8-20 selon **y** et 1-5 selon **z**.

Z2 = Les mailles: 1-10 selon **x**, 20-28 selon **y** et 1-5 selon **z**.

La figure 2 montre une vue de dessus du maillage du réservoir, où les régions Z1 et Z2 sont représentées en gris foncé.

La pression limite au fond du puits injecteur est de 6000 bars, et la pression limite au fond du puits producteur est de 80 bars.

On utilise l'algorithme d'optimisation CMA-ES pour optimiser les 12 paramètres représentant les 2 zones de drainage (6 paramètres par zone correspondant aux coordonnées des extrémités de chaque zone). On choisit une taille de population égale à 40 individus.

Les paramètres du modèle approché sont comme suit:

- $n_{init}$ = 1 ;

- $n_b$ = 1 ;

- nombre d'individus utilisés pour la régression locale (=$k$): 100 ;

- taille minimum de la structure de données : 150.

La population initiale (de taille 40) est échantillonnée aléatoirement dans les régions définies. La meilleure valeur de NPV obtenue à la population initiale est égale à $9{,}87.10^8$.

L'optimisation utilise 1312 simulations d'écoulement (56 itérations) pour atteindre une valeur de NPV supérieur à $3.10^9$ (égal à $3{,}01.10^9$).

Le procédé selon l'invention permet donc d'avoir une valeur de NPV égale à 3 fois la valeur initiale trouvée en début d'optimisation (le meilleur NPV obtenu à la première itération).

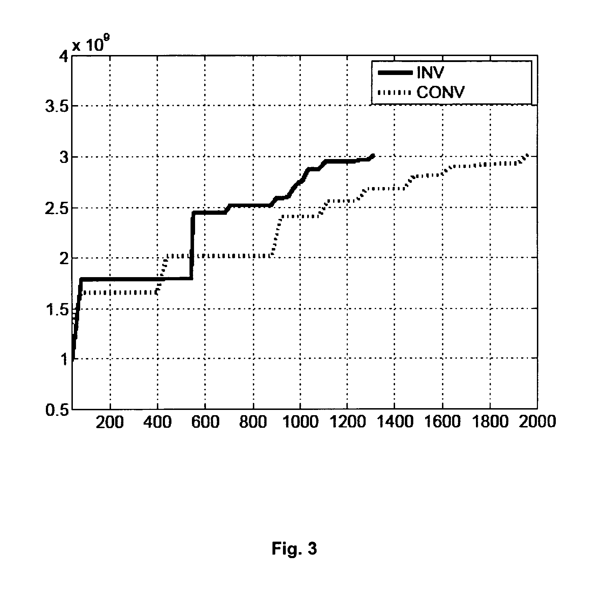

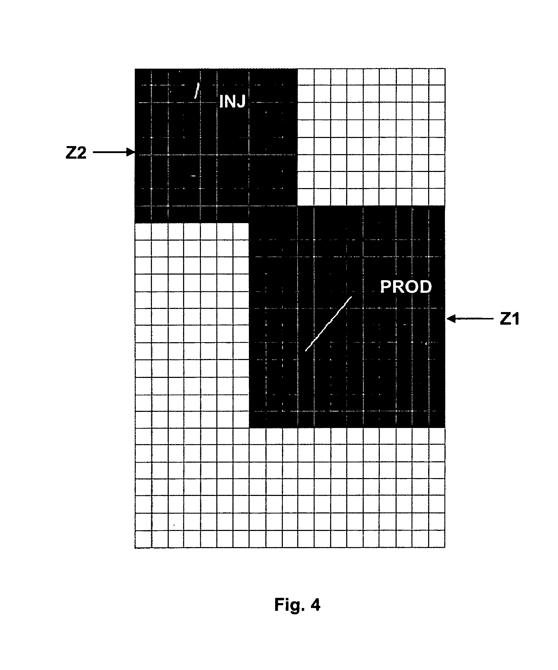

Au cours du processus d'optimisation, le procédé selon l'invention réussit à trouver de meilleures configurations de zone (Figure 3). La figure 3 montre l'évolution de la meilleure valeur de NPV trouvée en utilisant le procédé selon l'invention (INV) et la compare avec celle trouvée en utilisant une approche conventionnelle (CONV). L'axe des abscisses présente le nombre de simulations d'écoulement utilisées. L'axe des ordonnées présente la valeur du NPV. Les points sur la courbe marquent le passage d'une itération à une autre. La meilleure configuration est présentée dans la figure 4 avec les positions de la zone de drainage du puits producteur, notée PROD, et la position de la zone de drainage du puits injecteur, notée INJ.

PROD est définie par les deux extrémités ayant comme coordonnées (2587, 2658, 2385) et (2076, 2077, 2417). INJ est définie par les deux extrémités ayant comme coordonnées (711, 4872, 2421) et (674, 4729, 2417).

L'utilisation du modèle approché permet de remplacer un certain nombre de simulations d'écoulement à chaque itération (génération).

Pour atteindre une valeur de NPV supérieure à $3.10^9$, le procédé selon l'invention utilise 1312 simulations d'écoulement tandis qu'une simple optimisation avec CMA-ES sans l'utilisation du modèle approché nécessite 1960 simulations d'écoulement (Figure 3). La réduction en nombre de simulations, pour cet exemple, est égale à 33%.

En pratique, le nombre de simulations d'écoulement est le critère d'arrêt utilisé pour arrêter l'optimisation. On propose de fixer un nombre de simulations d'écoulement maximal égal à 1200. Le procédé selon l'invention permet donc de trouver une configuration de zone de drainage qui offre un NPV égal à $2,95.10^9$, tandis qu'une simple optimisation sans l'utilisation du modèle approché offre un NPV égal à $2,56.10^9$. Nous avons un gain de 15% sur NPV.

Ainsi, grâce au procédé selon l'invention, on obtient une meilleure configuration de zones de drainage en utilisant moins de simulations d'écoulement.

## Revendications

**1.** Procédé pour exploiter un réservoir d'hydrocarbures, dans lequel on détermine des emplacements de zones de drainage au sein d'un réservoir d'hydrocarbures, à partir d'un simulateur d'écoulement et d'un modèle de réservoir, dans lequel on définit un nombre de zones de drainage à forer au sein dudit réservoir, et on choisit au moins un critère de qualité de ladite exploitation, **caractérisé en ce que** l'on réalise les étapes suivantes :

    i. on génère aléatoirement des configurations de zones de drainage, en générant pour chaque configuration des emplacements pour chaque zones de drainage ;
    ii. on détermine les emplacements de chaque zone de drainage permettant d'optimiser ledit critère de qualité, en modifiant lesdites configurations au moyen d'un algorithme d'optimisation itératif au cours duquel :

        pour des premières itérations, on évalue ledit critère de qualité au moyen dudit simulateur d'écoulement et dudit modèle de réservoir, et
        pour des itérations ultérieures,

        - on construit un modèle approché d'évaluation dudit critère de qualité, à partir d'une structure de données contenant un ensemble de configurations associées à une valeur de critère obtenue au moyen dudit simulateur d'écoulement ;
        - on évalue une qualité dudit modèle approché au moyen d'une procédure de classement approché ;
        - on détermine ledit critère de qualité au moyen dudit modèle approché ou au moyen dudit simulateur d'écoulement en fonction de la qualité dudit modèle approché.

**2.** Procédé selon la revendication 1, dans lequel on définit ledit modèle approché en définissant une distance entre deux configurations, en sélectionnant k configurations de ladite structure de données dont la distance par rapport à la configuration pour laquelle on évalue ledit critère est la plus faible, et en définissant un modèle quadratique desdites k configurations.

**3.** Procédé selon l'une des revendications précédentes, dans lequel on évalue la qualité dudit modèle approché en réalisant les étapes suivantes :

    a. on calcule ledit critère de qualité pour chaque configuration au moyen du modèle approché, et l'on réalise un premier classement des configurations en fonction de la valeur dudit critère pour chaque configuration ;
    b. on sélectionne n configurations associés aux critères les plus élevés, et l'on calcule ledit critère de qualité pour ces n configurations au moyen dudit simulateur d'écoulement et dudit modèle de réservoir, chaque configuration et chaque critère étant ajoutés à ladite structure de donnée ;
    c. on calcule à nouveau ledit critère de qualité pour chaque configuration au moyen du modèle approché construit sur la structure de données complétée, et on réalise un second classement desdites configurations en fonction de la valeur dudit critère pour chaque configuration ;

d. on évalue la qualité dudit modèle approché en comparant ledit premier classement et ledit second classement.

4. Procédé selon l'une des revendications précédentes, dans lequel on réitère les étapes i à qui en faisant varier le nombre de zones de drainage.

5. Procédé selon l'une des revendications précédentes, dans lequel l'algorithme d'optimisation itératif est un algorithme stochastique de type CMA-ES.

6. Procédé selon l'une des revendications précédentes, dans lequel les zones de drainage à forer comportent des drains multi-branches.

7. Procédé selon l'une des revendications précédentes, dans lequel on calcule ledit critère de qualité pour chaque configuration au moyen de plusieurs modèles approchés correspondants à une ou plusieurs zones de drainage.

a

b

-2349m

-2581m

Fig. 1

**Fig. 2**

**Fig. 3**

**Fig. 4**

Europäisches
Patentamt

European
Patent Office

Office européen
des brevets

**RAPPORT DE RECHERCHE EUROPEENNE**

Numéro de la demande

EP 11 29 0348

| **DOCUMENTS CONSIDERES COMME PERTINENTS** | | | |
|---|---|---|---|
| Catégorie | Citation du document avec indication, en cas de besoin, des parties pertinentes | Revendication concernée | CLASSEMENT DE LA DEMANDE (IPC) |
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 novembre 2007 (2007-11-01), pages 592-593, XP007905525, ISSN: 0170-9291 * La description et des dessins ayant été dûment considérés, l'objet revendiqué concerne des processus compris dans la liste des objets et activités exclus de la brevetabilité en vertu des dispositions de l'article 52(2) et (3) CBE. Il est indiqué à la demanderesse que, selon la pratique établie de l'OEB, aucune recherche n'est à effectuer pour ces aspects de l'invention telle que revendiquée. Les seuls aspects techniques identifiables de l'invention telle que revendiquée concernent l'utilisation de techniques informatiques conventionnelles afin de traiter des données de nature non-technique. Les techniques informatiques employées sont considérées être universellement connues car largement répandues et accessibles à tous à la date de dépôt / priorité de la demande ci-présente. La notoriété d'un tel art antérieur ne peut être raisonnablement contestée. Aucune preuve écrite n'est donc | 1-7 | INV. G06Q10/00<br><br>DOMAINES TECHNIQUES RECHERCHES (IPC)<br><br>G06Q |
| | Le présent rapport a été établi pour toutes les revendications | | |
| | Lieu de la recherche | Date d'achèvement de la recherche | Examinateur |
| | La Haye | 22 novembre 2011 | Bassanini, Anna |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

| | Europäisches Patentamt | | |
|---|---|---|---|
| | European Patent Office | **RAPPORT DE RECHERCHE EUROPEENNE** | Numéro de la demande |
| | Office européen des brevets | | EP 11 29 0348 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| | considérée nécessaire. *<br><br>----- | | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 22 novembre 2011 | Bassanini, Anna |

EPO FORM 1503 03.82 (P04C02)

## RÉFÉRENCES CITÉES DANS LA DESCRIPTION

**Littérature non-brevet citée dans la description**

- **GUYAGULER, B. ; HORNE, R.** Optimization of well placement. *Journal of Energy Resources Technology,* 2000, vol. 122, 64-70
- **GUYAGULER, B. ; HORNE, R. ; ROGERS, L. ; ROSENZWEIG, J.** Optimization of well placement in a gulf of mexico waterflooding project. *SPE annual technical conference and exhibition,* 2000
- **YETEN, B. ; DURLOFSKY, L. ; AZIZ, K.** Optimization of nonconventional well type, location and trajectory. *SPE Journal,* 2003, vol. 8, 200-210
- **EMERICK, A. ; SILVA, E. ; MESSER, B. ; ALMEIDA, L. ; SZWARCMAN, D. ; PACHECO, M. ; VELLASCO, M.** Well placement optimization using a genetic algorithm with nonlinear constraints. *SPE reservoir simulation symposium,* 2009
- **HANDELS, M. ; ZANDVLIET, M. ; BROUWER, D. ; JANSEN, J.** Adjointbased well-placement optimization under production constraints. *SPE reservoir simulation symposium,* 2007

- **SARMA, P. ; CHEN, W.** Efficient well placement optimization with gradient-based algorithms and adjoint models. *SPE intelligent energy conference and exhibition,* 2008
- **BECKNER, B. ; SONG, X.** Field development planning using simulated annealing optimal economic well scheduling and placement. *SPE annual technical conference and exhibition,* 1995
- **DING, D.** Optimization of well placement using evolutionary algorithms. *SPE europec/EAGE annual conference and exhibition,* 2008
- **HANSEN N. ; OSTERMEIER A.** Completely derandomized self-adaptation in evolution strategies. *Evolutionary Computation,* 2001, vol. 9 (2), 159-195